(19) Europäisches Patentamt / European Patent Office / Office européen des brevets

(11) **EP 2 314 490 B1**

(12) **EUROPÄISCHE PATENTSCHRIFT**

(45) Veröffentlichungstag und Bekanntmachung des Hinweises auf die Patenterteilung:
**22.08.2012   Patentblatt 2012/34**

(51) Int Cl.:
*B60W 50/08* (2012.01)      *B60K 28/06* (2006.01)
*B60K 28/12* (2006.01)      *B60W 40/08* (2012.01)
*B60W 30/12* (2006.01)      *B60W 30/16* (2012.01)

(21) Anmeldenummer: **10013849.4**

(22) Anmeldetag: **21.10.2010**

(54) **Verfahren zur Steuerung des Betriebs eines vollautomatischen, zur unabhängigen Fahrzeugführung ausgebildeten Fahrerassistenzsystems eines Kraftfahrzeugs und Kraftfahrzeug**

Method for controlling the operation of a fully automatic driver assistance system of a motor vehicle for independent vehicle guidance and motor vehicle

Procédé de commande du fonctionnement d'un système d'assistance au conducteur totalement automatique développé pour guider un véhicule de manière indépendante destiné à un véhicule automobile et véhicule automobile

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.10.2009   DE 102009050399**

(43) Veröffentlichungstag der Anmeldung:
**27.04.2011   Patentblatt 2011/17**

(73) Patentinhaber: **Audi AG**
**85045 Ingolstadt (DE)**

(72) Erfinder:
 • **Hörwick, Markus**
   **80939 München (DE)**
 • **Siedersberger, Karl-Heinz**
   **85049 Ingolstadt (DE)**

(74) Vertreter: **Thielmann, Frank**
**AUDI AG,**
**Patentabteilung**
**85045 Ingolstadt (DE)**

(56) Entgegenhaltungen:
DE-A1- 10 220 782      DE-A1- 10 231 687
DE-A1- 10 350 276      DE-A1-102004 048 492
DE-A1-102006 039 682

**Beschreibung**

Die Erfindung betrifft ein Verfahren zur Steuerung des Betriebs eines vollautomatischen, zur unabhängigen Fahrzeugführung ausgebildeten Fahrerassistenzsystems eines Kraftfahrzeugs, bei welchem bei Eintritt wenigstens einer Übernahmebedingung eine Fahrerübernahmeaufforderung ausgegeben wird, welche bei Fahrübernahme durch den Fahrer, insbesondere durch Betätigung des Lenkrads und/oder der Pedalerie und/oder eines Schalters, zum Deaktivieren des Fahrerassistenzsystems führt, sowie ein Kraftfahrzeug mit einem solchen Fahrerassistenzsystem.

Im Stand der Technik sind viele Fahrerassistenzsysteme bekannt, bei denen die Fahrzeugführung, also die Längs- bzw. Querregelung, teils durch den Fahrer, teils durch das Fahrerassistenzsystem erfolgt. Beispiele für solche Fahrerassistenzsysteme sind Längsführungssysteme, beispielsweise ACC (automatic cruise control) und Stop-and-Go-Systeme, Querführungssysteme, die ein Spurmittenführungssystem aufweisen, oder auch Spurhalteassistenten. Die Verantwortung für die vom Kraftfahrzeug durchgeführten Aktionen und Fahrmanöver liegt bei solchen Fahrerassistenzsystemen weiter beim Fahrer, der das Fahrerassistenzsystem und dessen Handlungen laufend überwacht.

Aktuell richtet sich die Entwicklung von Fahrerassistenzsystemen hauptsächlich auf sogenannte vollautomatische Fahrerassistenzsysteme, die die Fahrzeugführung (innerhalb definierter Grenzen) vollständig übernehmen sollen. Ein entsprechendes Beispiel ist der sogenannte Stauassistent. Diese Systeme haben beispielsweise zum Ziel, dem Fahrer im Stau, also bei Geschwindigkeiten kleiner als 60 km/h, sowohl die Längsführung bezüglich des Vorderfahrzeugs als auch die Querführung innerhalb der eigenen Spur abzunehmen. Ein anderes Beispiel sind automatische Einparksysteme oder dergleichen, letztlich werden jedoch solche vollautomatischen Fahrerassistenzsysteme für verschiedene, auch bei höheren Geschwindigkeiten anzuwendende Fälle entwickelt.

Da vollautomatische Fahrerassistenzsysteme dem Fahrer die komplette Fahraufgabe (Längs- und Querführung) über einen längeren Zeitraum voll-ständig abnehmen, besteht die Möglichkeit, dass sich der Fahrer nach einiger Zeit von der Fahraufgabe zurückziehen und Nebenbeschäftigungen nachgehen wird. Dies hat zur Folge, dass er im Falle einer sogenannten Fahrerübernahmeaufforderung, wenn also bestimmte Systemgrenzen erreicht sind und der Fahrer selbst wieder die Kontrolle über das Kraftfahrzeug erhalten soll, nicht oder nicht schnell genug in adäquater Weise reagieren kann. Auf diese Weise würde - anders als bei teilautomatischen Fahrerassistenzsystemen - der Fahrer, da er nicht fahrübernahmebereit ist, nicht mehr als Rückfallebene fungieren können.

Systemgrenzen eines vollautomatischen Fahrerassistenzsystems sollen im Verständnis der vorliegenden Erfindung nicht nur die Funktionsgrenzen, also der der Spezifikation zu entnehmende Einsatzbereich (bei Stauassistenzsystemen beispielsweise die Grenzgeschwindigkeit oder das Verlassen bestimmter Umgebungen, wie beispielsweise einer Autobahn), sein, sondern auch beispielsweise Systemausfälle/Systemfehler oder externe Einflüsse, wie beispielsweise das Öffnen einer Tür durch den Fahrer. Bei allen derartigen Vorgängen, wenn mithin eine Übernahmebedingung erfüllt ist, wird das vollautomatische Fahrerassistenzsystem den Fahrer auffordern, die Fahrzeugführung, also die Längs- bzw. Querregelung, wieder zu übernehmen. Dies kann beispielsweise dadurch erkannt werden, dass der Fahrer das Lenkrad und/oder die Pedalerie betätigt. Dann kann das vollautomatische Fahrerassistenzsystem wieder deaktiviert werden. Üblicherweise wird dem Fahrer bei einer Fahrerübernahmeaufforderung ein entsprechender optischer und/oder akustischer und/oder haptischer Hinweis gegeben, beispielsweise eine deutliche Anzeige auf einer Kombinationsanzeige, eine Sprachansage, ein Vibrieren des Lenkrads oder dergleichen. Ist der Fahrer in einer solchen Situation, insbesondere einer kritischen Situation wie einem Systemausfall oder dergleichen, nicht in der Lage, schnell die Fahrzeugführung wieder zu übernehmen, können Sicherheitsprobleme, insbesondere Unfälle, auftreten.

DE 103 50 276 A1 offenbart eine Vorrichtung zur Ermüdungswarnung in Kraftfahrzeugen mit Abstandswarnsystem. Darin wird im Rahmen eines ACC-Systems (Adaptive Cruise Control) vorgeschlagen, dass der im Abstandswarnsystem oder Abstandsregelsystem zugrunde gelegte Warnabstand in Abhängigkeit von dem erfassten Ermüdungszustand verändert wird. So soll der Fahrer, wenn er ermüdet ist, nicht durch unnötige Signale belästigt werden. Anstelle oder zusätzlich zu der Ausgabe eines Warnsignals kann im Rahmen des Abstandsregelsystems auch eine automatische Verzögerung des Fahrzeugs erfolgen.

DE 102 20 782 A1 betrifft ein Notfallsystem für Kraftfahrzeuge. Darin wird vorgeschlagen, ein Kraftfahrzeug gesteuert zu verzögern, wenn eine Fahruntüchtigkeit des Fahrers erkannt wurde, wobei die Funktionen eines Fahrerassistenzsystems ausgenutzt werden sollen. Beispielsweise kann bei erkannter Fahruntüchtigkeit die Kontrolle an das Fahrerassistenzsystem übergeben werden. Eine Übersteuerungsmöglichkeit soll deaktiviert werden.

Ein Verfahren zum Gewährleisten eines sicheren Betriebs eines Kraftfahrzeugs wird durch DE 10 2006 039 682 A1 offenbart. Dort kann vorgesehen sein, dass zunächst ein Warnsignal an den Fahrer abgegeben wird, woraufhin nach einer bestimmten Zeitdauer nach Abgabe des Warnsignals ein Abstandsregeltempomat, welcher bei Erkennung einer Fahruntüchtigkeit aktiviert wurde, das Fahrzeug auf Stillstand herunterregelt.

Der Erfindung liegt daher die Aufgabe zugrunde, ein Steuerungsverfahren für vollautomatische Fahrerassistenzsysteme anzugeben, welches auch bei nicht als Rückfallebene zur Verfügung stehendem Fahrer im Fall des Erreichens einer Systemgrenze dennoch gestattet, hinreichende Sicherheit zu bieten. Zur Lösung dieser Aufgabe ist bei einem Verfahren der eingangs genannten Art erfindungsgemäß vorgesehen, dass bei Eintritt einer Übernahmebedingung ein wenigstens einen zur Überführung des Kraftfahrzeugs in einen sicheren Zustand, insbesondere den Stillstand, dienenden Fahreingriff und insbesondere auch eine Fahrerübernahmeaufforderung umfassender Aktionsplan, der einen zeitlichen Ablauf von Steuerungsbefehlen für Fahrzeugsysteme enthält, ausgeführt wird, wobei ein einen Längsführungseingriff, insbesondere einen Bremseingriff, umfassender Aktionsplan verwendet wird, wobei bei Ausführung des Bremseingriffs die diesem zugrunde liegende Bremsverzögerung mit einer aktuell ermittelten Bremsverzögerung der normalen Funktion des Fahrerassistenzsystems verglichen wird und die höhere Bremsverzögerung genutzt wird.

Erfindungsgemäß wird also vorgeschlagen, nicht mehr allein eine Fahrerübernahmeaufforderung auszugeben, sondern dieses Konzept zu einem Aktionsplan zu erweitern, der Fahreingriffe enthält, die das Kraftfahrzeug auch dann, wenn der Fahrer nicht fahrübernahmebereit ist und als Rückfallebene wegfällt, in einen sicheren Zustand, insbesondere und bevorzugt also den Stillstand des Kraftfahrzeugs, überführen können. Es wird also durch den oder die Fahreingriffe eine weitere Rückfallebene geschaffen, die es ermöglicht, das Kraftfahrzeug ohne Einwirken des Fahrers wieder in einen sicheren Zustand, insbesondere den Stillstand, zu überführen. Wird eine Systemgrenze erreicht, wird nicht nur eine Fahrerübernahmeaufforderung ausgelöst, sondern es wird zusätzlich sichergestellt, dass das Fahrzeug auch dann, wenn der Fahrer nicht im Stande ist, angemessen zu reagieren, für eine erhöhte Sicherheit durch Überführen des Kraftfahrzeugs in den sicheren Zustand gesorgt wird. Es sei jedoch darauf hingewiesen, dass auch Aktionspläne ohne Fahrerübernahmeaufforderung grundsätzlich denkbar sind.

Wird dementsprechend eine Systemgrenze erreicht, ist also eine von im Allgemeinen mehreren Übernahmebedingungen erfüllt, so wird, insbesondere abhängig von der oder den erfüllten Übernahmebedingungen, ein Aktions-plan ausgewählt, der zum einen die Fahrerübernahmeaufforderung ausgibt, zum anderen aber auch bei nicht erfolgender Fahrerübernahme das Fahrzeug dennoch in einen sicheren Zustand, insbesondere den Stillstand, überführt. Es kann also vorgesehen sein, dass bei Fahrübernahme durch den Fahrer der Aktionsplan abgebrochen wird, da ja nun der Fahrer die Verantwortung selbst übernimmt. Jedoch kann bei schwerwiegenden Systemausfällen oder dergleichen, die das gesamte Kraftfahrzeug betreffen, bei bestimmten Übernahmebedingungen und/oder Aktionsplänen ebenso vorgesehen sein, dass eine Fahrerübernahme den Aktionsplan nicht abbricht.

Der Aktionsplan ist dabei ein zeitlicher Ablauf von Steuerungsbefehlen für verschiedene Fahrzeugsysteme. Solche Steuerungsbefehle können beispielsweise eine Kombinationsanzeige zur Ausgabe der Fahrerübernahmeaufforderung ansprechen, bei einem Fahreingriff können durch ein Steuergerät des vollautomatischen Fahrerassistenzsystems beispielsweise unmittelbar oder über entsprechende weitere Steuergeräte die Bremsen und/oder die Lenkung angesteuert werden und dergleichen. Denkbar sind auch Steuerungsbefehle für weitere Fahrzeugsysteme, beispielsweise die Warnblinkanlage, wie im Folgenden noch näher erläutert werden wird. Jeder dieser Steuerungsbefehle ist einem Zeitpunkt bzw. einer Zeitspanne innerhalb des Aktionsplans zugeordnet. Zu diesem Zeitpunkt bzw. während dieser Zeitspanne wird der Steuerungsbefehl ausgeführt.

Es ist ferner vorgesehen, dass bei Ausführung des Bremseingriffs die diesem zugrunde liegende Bremsverzögerung mit einer aktuell ermittelten Bremsverzögerung der normalen Funktion des Fahrerassistenzsystems verglichen wird und die höhere Bremsverzögerung genutzt wird. Auf diese Weise wird die Sicherheit bei zumindest teilweise noch funktionsfähigem Fahrerassistenzsystem weiter erhöht, da auch dessen Daten - die beispielsweise eine stärkere Bremsung erfordern können, um nicht auf einen Vordermann aufzufahren oder dergleichen - weiter berücksichtigt werden. So wird das Fahrerassistenzsystem im Bezug auf die Längsregelung weiter vorteilhaft mitgenutzt, so dass Unfälle weiter vermieden werden können. Es handelt sich um eine Art hybrides Bremsen, das sowohl die normale Fahrerassistenzsystemsfunktion als auch den Aktionsplan berücksichtigt. Selbstverständlich läuft das erfindungsgemäße Verfahren in allen Ausgestaltungen vollständig automatisch in einem Steuergerät des vollautomatischen Fahrerassistenzsystems ab, ohne dass ein manueller Eingriff des Fahrers erforderlich ist, da es ja schließlich auch Ziel ist, das Kraftfahrzeug ohne Einwirkung des Fahrers dennoch in einen sicheren Zustand überführen zu können.

Die erfindungsgemäße Erweiterung der Funktionalität bei Eintritt einer Übernahmebedingung hat folglich insgesamt den Vorteil, dass dem Fahrer die Möglichkeit gegeben wird, die Fahraufgabe tatsächlich an das vollautomatische Fahrerassistenzsystem abzugeben und Nebentätigkeiten nachzugehen, während das Kraftfahrzeug selbstgesteuert fährt. Dies gelingt durch die Einführung der weiteren, der Fahrzeugsicherheit dienenden Rückfallebene.

In weiterer Ausgestaltung des erfindungsgemäßen Verfahrens kann vorgesehen sein, dass der Aktionsplan aus einer Anzahl fest vorgegebener Aktionspläne ausgewählt und/oder unter Berücksichtigung von die aktuelle Situation beschreibenden Daten, insbesondere der Übernahmebedingung, angepasst wird. Es ist also denkbar, dass insbesondere verschiedenen Übernahmebedingungen zugeordnete Aktionspläne vorgesehen sind, von denen - insbesondere anhand der erfüllten Übernahmebedingungen - ein entsprechender Aktions-

plan ausgewählt wird. Die Übernahmebedingungen und/oder die Aktionspläne können dabei selbstverständlich priorisiert werden, so dass, wenn mehrere Übernahmebedingungen erfüllt sind und/oder mehrere mögliche Aktionspläne zur Verfügung stehen, grundsätzlich die Übernahmebedingung und/oder der Aktionsplan mit der höchsten Priorität zuerst berücksichtigt wird. Denkbar ist es jedoch auch, dass verschiedene Aktionspläne parallel ausgeführt werden, wenn ihre entsprechenden Übernahmebedingungen erfüllt sind. In einem solchen Fall würden einander widersprechende Aktionen derart aufgelöst werden, dass grundsätzlich immer die Aktionen des Aktionsplans, beschrieben durch Steuerungsbefehle, ausgeführt werden, welche am ehesten der Sicherheit des Kraftfahrzeugs dienen. Vorzugsweise kann zudem vorgesehen sein, dass ein Aktionsplan unter Berücksichtigung von die aktuelle Situation beschreibenden Daten, insbesondere der Übernahmebedingung, angepasst wird. Die die aktuelle Situation beschreibenden Daten, welche insbesondere auch Messdaten verschiedener Sensoren bzw. Sensorsysteme umfassen können, sind nicht nur die Umgebung des Kraftfahrzeugs beschreibende Daten, sondern auch die Fahrdynamik und Stellgrößen im Kraftfahrzeug beschreibende Daten, wobei zusätzlich selbstverständlich auch verschiedenste andere Informationen, die innerhalb des Kraftfahrzeugs vorliegen, also die aktuelle Situation beschreibende Daten, berücksichtigt werden können. Insbesondere sind die die aktuelle Situation beschreibenden Daten folglich, wenn sie nicht dem Steuergerät des vollautomatischen Fahrerassistenzsystems ohnehin vorliegen, durch wenigstens einen Sensor und/oder wenigstens ein anderes Fahrzeugsystem zu ermitteln. Besonders relevant sind hier selbstverständlich alle Daten, die die Art der erreichten Systemgrenze betreffen - bei der Auswahl bzw. Anpassung eines Aktionsplanes sollte also grundsätzlich die Art der erreichten Systemgrenze berücksichtigt werden.

Wie einleitend bereits ausgeführt, werden die Systemgrenzen eines vollautomatischen Fahrerassistenzsystems beispielsweise durch geeignete, innerhalb eines Steuergeräts des Fahrerassistenzsystems realisierte Module überwacht. Dabei können beispielsweise Schnittstellen zwischen Hardware-Komponenten, beispielsweise Sensoren, und algorithmischen Modulen des Fahrerassistenzsystems, beispielsweise eines Fahrspur-Detektors, sowie zwischen algorithmischen Modulen untereinander auf Funktionsfähigkeit und Datenfrequenz überwacht werden. Weitere zu berücksichtigende Systemgrenzen können auch externe Einflüsse umfassen, also nicht nur die Überwachung unerlaubter Fahreraktionen, beispielsweise eines Öffnens der Tür, sondern auch die Überwachung fahrerassistenzsystemunabhängiger Fahrzeugkomponenten, beispielsweise eine defekte Ölpumpe, oder nicht tolerierbarer Umwelteinflüsse, beispielsweise eine eisglatte Fahrbahn. Weiterhin ist es denkbar, die Funktionsgrenzen des Fahrerassistenzsystems selbst zu überwachen. Funktionsgrenzen können direkt aus der Funktionsspezifikation des Fahrerassistenzsystems abgeleitet werden und betreffen die Umstände, unter denen das Fahrerassistenzsystem betrieben werden darf. Im Beispiel eines Stauassistenzsystems als vollautomatisches Fahrerassistenzsystem muss beispielsweise überwacht werden, ob sich das Fahrzeug im Stau und auf einer Autobahn befindet.

Ersichtlich sind viele Möglichkeiten denkbar, wie eine Systemgrenze des vollautomatischen Fahrerassistenzsystems erreicht bzw. also eine Übernahmebedingung erfüllt werden kann. Abhängig hiervon können selbstverständlich auch verschiedene, insbesondere verschieden schnell sichernde, Aktionspläne oder Anpassungen von Aktionsplänen vorgesehen sein, wobei beispielsweise beim Erreichen einer Funktionsgrenze das vollautomatische Fahrerassistenzsystem ja grundsätzlich noch funktioniert und keine sehr kritische Situation vorliegt, so dass eine Überführung in den sicheren Zustand langsam und komfortabel erfolgen kann, während bei Ausfall wichtiger Komponenten des Fahrerassistenzsystems oder anderer Fahrzeugsysteme ein schnelleres, gegebenenfalls unkomfortableres Eingreifen als Rückfallebene erforderlich sein kann. Beispiele hierzu werden im Folgenden noch näher diskutiert.

Vorzugsweise kann eine in den sicheren Zustand führende Rückfalltrajektorie ermittelt werden, aus welcher die Fahreingriffe ermittelt werden. Eine solche Rückfalltrajektorie wird in nahezu allen tatsächlich realisierten Ausgestaltungen des erfindungsgemäßen Verfahrens eine Längsrückfalltrajektorie umfassen, die die Längsregelung des Kraftfahrzeugs betrifft, also insbesondere beschreibt, wie und zu welchem Zeitpunkt das Kraftfahrzeug in den Stillstand abgebremst werden soll. Zusätzlich können mit besonderem Vorteil auch Querrückfalltrajektorien enthalten sein, die also die Querregelung, mithin die Lenkung, des Kraftfahrzeugs betreffen. Ist eine solche insgesamte Rückfalltrajektorie ermittelt - was im Übrigen auch zeitabschnittsweise geschehen kann -, so können hieraus die entsprechenden, die Fahreingriffe realisierenden Steuerungsbefehle des Aktionsplans bestimmt bzw. angepasst werden, so dass letztlich die Rückfalltrajektorie die Solltrajektorie des in den sicheren Zustand zu überführenden Kraftfahrzeugs darstellt.

Mit besonderem Vorteil ist auch ein modularer Aufbau der Aktionspläne denkbar, so dass vorgesehen sein kann, dass ein verschiedene, insbesondere in Abhängigkeit von die aktuelle Situation beschreibenden Daten parametrierbare Steuerungsbefehle umfassender Aktionsplan verwendet wird, wobei die Steuerungsbefehle neben einer Fahrerübernahmeaufforderung insbesondere einen Längsführungseingriff und/oder einen Querführungseingriff als Fahreingriff und/oder das Aktivieren der Warnblinkanlage und/oder das Nutzen einer Fahrzeug-zu-Fahrzeug-Kommunikation zur Übertragung einer Warnung und/oder das Aktivieren eines Signalhorns umfassen. Ein Aktions-plan kann also aus einer Auswahl verschiedener Aktionen, repräsentiert durch Steuerungsbefehle, entstehen, wobei die Steuerungsbefehle insbesondere durch Parameter angepasst werden können. Abhängig von den bereits beschriebenen, die aktuelle Situation beschreibenden Daten kann eine recht situationsgenaue Anpassung erfolgen, die auf eine größtmögliche Sicherheit hin ausgelegt ist. Neben den Fahreingriffen, die selbstverständlich Längsführungsund/oder Querführungseingriffe umfassen können, kann dabei auch die Information anderer Verkehrsteilnehmer über das Einleiten der Rückfallebene, also das Überführen des Kraftfahrzeugs in einen sicheren Zustand, insbesondere den Stillstand, wichtiger Bestandteil der Aktionspläne sein. Beispielsweise kann eine Warnblinkanlage des Kraftfahrzeugs aktiviert werden und/oder ein Signalhorn (Hupe) des Kraftfahrzeugs kann betätigt werden. Andere Verkehrsteilnehmer können sich dann besser auf die das warnende Kraftfahrzeug in den sicheren Zustand überführenden Fahreingriffe einstellen. Denkbar ist es mit besonderem Vorteil auch, eine Fahrzeug-zu-Fahrzeug-Kommunikation (car-to-car-communication) zu nutzen, um entsprechende Informationen an in der Umgebung vorhandene Kraftfahrzeuge zu übertragen. Dies kann in den anderen Kraftfahrzeugen selbstverständlich auch zu entsprechenden Aktionen führen. Die Nutzung der Fahrzeug-zu-Fahrzeug-Kommunikation hat sich als besonders vorteilhaft in Zusammenhang mit bei höheren Geschwindigkeiten betriebenen vollautomatischen Fahrerassistenzsystemen erwiesen. Dann ist insbesondere als sicherer Zustand auch der Stillstand denkbar, da andere Kraftfahrzeuge frühzeitig gewarnt werden und sich darauf einstellen können, dass beispielsweise ein vorausfahrendes Kraftfahrzeug aufgrund einer Fehlfunktion in den Stillstand überführt wird. Als weitere Sicherheitsmaßnahme kann durch einen Steuerungsbefehl auch ein weiteres Bremssystem, insbesondere eine Parkbremse, angesprochen werden. So kann beispielsweise bei erreichtem Stillstand das Kraftfahrzeug mittels der Parkbremse in diesem gehalten werden.

Wie bereits erwähnt, wird ein einen Längsführungseingriff, insbesondere einen Bremseingriff, umfassender Aktionsplan verwendet. Hierfür seien im Folgenden drei besonders vorteilhafte Gestaltungen von Aktionsplänen dargestellt, die insbesondere allesamt für verschiedene Situationen genutzt werden können.

So kann vorgesehen sein, dass als Aktionsplan ein Komfortbremsplan verwendet wird, bei dem zunächst eine Fahrerübernahmeaufforderung ausgegeben wird, wobei, wenn nach einer vorbestimmten Zeitspanne keine Fahrübernahme durch den Fahrer erfolgt, mit einer vorbestimmten Komfortbremsverzögerung in den Stillstand gebremst wird und insbesondere die Warnblinkanlage aktiviert wird. Ein solcher Komfortbremsplan kann insbesondere in weniger kritischen Situationen vorteilhaft eingesetzt werden. Zunächst wird, wie dies allgemein bekannt ist, die Fahrerübernahmeaufforderung ausgegeben. Übernimmt der Fahrer allerdings innerhalb der vorbestimmten Zeitspanne nicht, so wird als weitere Rückfallebene eine automatische Komfortbremsung in den Stillstand vorgenommen, wobei zusätzlich andere Verkehrsteilnehmer, beispielsweise durch Aktivieren der Warnblinkanlage, vor dem bevorstehenden Stillstand des Kraftfahrzeugs gewarnt werden können. Es wird also zunächst überprüft, ob der Fahrer selbst als Rückfallebene zur Verfügung steht. Ist dies nicht der Fall, so werden als weitere Rückfallebene Fahreingriffe vorgenommen, die das Fahrzeug auf komfortable Art in den Stillstand bremsen. Selbstverständlich bleibt die Fahrübernahmeaufforderung jederzeit aktiv, das bedeutet, auch, wenn bereits der Bremsvorgang eingeleitet wurde, kann der Fahrer durch Fahrübernahme noch selbst die Verantwortung für das Fahrgeschehen übernehmen. Ein solcher Komfortbremsplan lässt sich beispielsweise mit besonderem Vorteil bei Erreichen einer Funktionsgrenze durchführen, bei einem Stauassistenten beispielsweise, wenn das Ende der Autobahn detektiert wurde. Die grundsätzliche Funktionalität des Fahrerassistenzsystems ist dann nicht eingeschränkt, so dass dem Fahrer eine gewisse Zeit zur Übernahme gelassen werden kann, bis das Kraftfahrzeug zur Sicherheit in den Stillstand überführt wird und gegebenenfalls zur Warnung anderer Verkehrsteilnehmer die Warnblinkanlage aktiviert wird.

Eine zweite vorteilhafte Variante eines Aktionsplans ist gegeben, wenn als Aktionsplan ein Notbremsplan verwendet wird, bei dem ein sofortiger Bremseingriff mit einer maximalen Bremsverzögerung erfolgt, wobei insbesondere gleichzeitig eine Fahrerübernahmeaufforderung und/oder ein Aktivieren der Warnblinkanlage und/oder ein Aktivieren des Signalhorns und/oder ein Senden einer Warnnachricht an wenigstens ein benachbartes Kraftfahrzeug erfolgt. Eine solche Variante eines Aktionsplans kann für besonders kritische Situationen vorgesehen werden, beispielsweise beim Ausfall eines kritischen Systems oder dergleichen, wenn also die größtmögliche Sicherheit durch einen schnellstmöglichen Stillstand des Kraftfahrzeugs gegeben ist. Dann kann als Aktionsplan folglich eine Vollbremsung durchgeführt werden, wobei mit besonderem Vorteil eine Warnung der anderen Verkehrsteilnehmer veranlasst wird, also beispielsweise durch die Warnblinkanlage und/oder das Signalhorn, wobei aber auch hier wieder das Senden einer Warnung durch Fahrzeug-zu-Fahrzeug-Kommunikation denkbar und vorteilhaft ist.

In vielen Fällen ist es jedoch auch möglich, aus die aktuelle Situation beschreibenden Daten schlusszufolgern, bis zu welcher Entfernung ein Stillstand des Kraftfahrzeugs zu dessen Sicherheit tatsächlich erforderlich ist. In diesem Fall kann eine dritte, besonders vielseitige Variante eines Aktionsplans eingesetzt werden, nämlich ein anpassbarer, auf eine bestimmte Stillstandsentfernung ausgelegter Zielbremsplan, bei dem als Parameter die Stillstandsentfernung übergeben wird. Die Stillstandsentfernung gibt also letztlich den maximalen Bremsweg an, gemäß dem die verschiedenen Aktionen des Zielbremsplans angepasst werden können.

So kann beispielsweise vorgesehen sein, dass aus der Stillstandsentfernung und der ebenso übergebenen aktuellen Geschwindigkeit des Kraftfahrzeugs unter Annahme einer gegebenenfalls von die aktuelle Situation beschreibenden Daten, insbesondere der Übernahmebedingung, abhängigen Sollbremsverzögerung ein Bremsweg, unter Vorgabe einer Wartezeit ein Warteweg und ein aktionsfreier Freiweg durch Subtraktion des Bremswegs und des Wartewegs von der Stillstandsentfernung ermittelt werden, wobei

- falls der Freiweg größer oder gleich Null ist, zunächst für eine dem Freiweg entsprechende Fahrtzeit keine Aktion erfolgt, wonach eine Fahrerübernahmeaufforderung ausgegeben wird und, falls innerhalb der Wartezeit keine Fahrübernahme durch den Fahrer erfolgt, nach der Wartezeit ein Bremseingriff mit der Sollbremsverzögerung erfolgt,
- falls der Freiweg kleiner als Null, aber der Bremsweg kleiner als oder gleich der Stillstandsentfernung ist, unmittelbar eine Fahrerübernahmeaufforderung ausgegeben wird und, falls innerhalb einer dem Warteweg entsprechenden, modifizierten Wartezeit keine Fahrübernahme durch den Fahrer erfolgt, nach der modifizierten Wartezeit ein Bremseingriff mit der Sollbremsverzögerung erfolgt, und
- falls der Freiweg kleiner als Null ist und der Bremsweg größer als die Stillstandsentfernung ist, unmittelbar eine Fahrerübernahmeaufforderung und ein Bremseingriff mit einer eine Bremsung innerhalb der Stillstandsentfernung erlaubenden oder maximalen Bremsverzögerung erfolgen.

Abhängig von der zur Verfügung stehenden Stillstandsentfernung liegen mithin alle drei Komponenten des Aktionsplans, also der Freiweg, der Warteweg und der Bremsweg vor, nur zwei dieser Abschnitte, also der Warteweg und der Bremsweg, oder es muss gar direkt gebremst werden. Dies alles kann auf einfache Weise ermittelt werden. Mithin wird mit dieser anpassbaren Variante eines Aktionsplans eine dynamisch auf verschiedene Situationen anpassbare Rückfallebene geschaffen, die sich an einer konkreten, an Sicherheitskriterien orientierten Stillstandsentfernung orientiert.

Selbstverständlich kann auch in diesem Fall eines Zielbremsplans mit besonderem Vorteil vorgesehen sein, dass mit Durchführen eines Bremseingriffs auch ein Aktivieren der Warnblinkanlage und/oder ein Aktivieren des Signalhorns und/oder ein Senden einer Warnnachricht an wenigstens ein benachbartes Kraftfahrzeug erfolgt. So können auch hier umgebende Fahrer vor der Überführung des Kraftfahrzeugs in einen sicheren Zustand gewarnt werden.

Die Stillstandsentfernung kann dabei unter Berücksichtigung der Übernahmebedingung und/oder von zu der Übernahmebedingung führenden Daten und/oder aus anderen, die aktuelle Situation beschreibenden Daten ermittelt werden. Während also die Stillstandsentfernung grundsätzlich für bestimmte erfüllte Übernahmebedingungen vorgegeben werden kann, ist es auch denkbar, diese tatsächlich aus einer konkreten Betrachtung der Situation schlusszufolgern. Handelt es sich beispielsweise um ein Stauassistenzsystem, und als Systemgrenze ist ein Autobahnende bald erreicht, so kann der noch fahrbare Weg bis zum Erreichen des Autobahnendes als Stillstandsentfernung genutzt werden. Beim Auswahl einer Kamera mit einem Spurtracker kann deren Vorausschaureichweite als Stillstandsentfernung dienen, da im Moment des Ausfalls bis zu der Vorausschaureichweite noch Informationen vorliegen. Auch wenn beispielsweise eine Kamera ausfällt, jedoch der Radar noch verfügbar ist, kann der letzte Stand der Kameradaten genutzt werden. Ersichtlich sind verschiedene Möglichkeiten denkbar, einen speziell auf die Situation angepassten Zielbremsplan zu erhalten, wenn die Stillstandsentfernung aus der aktuellen Situation korrekt hergeleitet wird.

Vorteilhafterweise kann zudem vorgesehen sein, dass ein Kraftfahrzeug mit einem wenigstens teilweise redundant ausgeführten Bremssystem verwendet wird. Selbst bei Ausfall der redundant ausgeführten Komponenten des Bremssystems, insbesondere bei redundanter Ausführung des gesamten Bremssystems, kann sichergestellt werden, dass das Kraftfahrzeug in den sicheren Zustand des Stillstands übergeführt werden kann. Gerade bei vollautomatischen Fahrerassistenzsystemen ist eine solche zusätzliche Sicherung für den Fall, dass der Fahrer nicht eingreifen kann, besonders sinnvoll.

Wie bereits erwähnt, sind Längsführungseingriffe, insbesondere Bremseingriffe, für das Überführen des Kraftfahrzeugs in einen sicheren Zustand, also insbesondere den Stillstand, meist zwangsläufig erforderlich. Jedoch ist es zweckmäßigerweise auch denkbar, wenn ein - insbesondere zusätzlich - einen Querführungseingriff umfassender Aktionsplan verwendet wird. Dann kann beispielsweise dafür gesorgt werden, dass das Kraftfahrzeug weiterhin seine aktuelle Spur hält, die Straße nicht verlässt oder dergleichen. Dabei kann vorgesehen sein, dass ein den Querführungseingriff beschreibender Lenkwinkel unter Berücksichtigung von das Umfeld des Kraftfahrzeugs beschreibenden Umfelddaten, insbesondere Sensordaten und/oder Daten eines Navigationssystems, ermittelt wird. Dabei ist es von besonderem Vorteil, wenn eine einfache, mit möglichst wenig Daten auskommende Möglichkeit verwendet wird, eine sichere Querrückfalltrajektorie aufzufinden. Eine solche, besonders einfache Möglichkeit stellt eine mit besonderem Vorteil zu verwendende Variante dar, bei der in jedem Zeitschritt des Aktionsplans mit Querführungseingriff alle fahrphysikalisch möglichen Klothoiden ermittelt und durch wenigstens ein Bewertungskriterium, insbesondere die Hindernissfreiheit der Klothoide und/oder das Halten der aktuellen Spur, bewertet werden, wobei die am besten bewertete Klothoide zur Bestimmung des Lenkwinkels ausgewählt wird. Ein derartiges Verfahren ist aus dem Stand der Technik beispielsweise als DAMN-Ansatz bekannt, vgl. beispielsweise den Artikel von Rosenblatt, J. K.: DAMN: A Distributed Architecture for Mobile Navigation. Robotics Institute, Carnegie Mellon University, Pittsburgh 1997. Ein derartiges Verfahren ist nicht nur sehr einfach durchführbar, sondern auch fehleranfällig. Die Grundidee dabei ist es, dass in jedem Zeitschritt (vorgegeben durch die Frequenz, in der die beispielsweise sensorisch ermittelten Umfelddaten geliefert werden), alle fahrphysikalisch theoretisch möglichen Klothoiden ermittelt und bewertet werden. Die Klothoiden können dabei über ihre Krümmung und Krümmungsänderung parametriert werden. Bei der Bewertung sind verschiedene Sicherheitsaspekte relevant, wobei beispielsweise die Hindernissvermeidung und das Halten der eigenen Spur verwendet werden können. Aus der Krümmung und der Krümmungsänderung der am besten bewerteten Klothoide wird über die Ackermann-Gleichung der zugehörige Lenkwinkel berechnet. Dieser Lenkwinkel wird also in jedem Zeitschritt neu berechnet und entsprechend zur Querführung, also zur Ansteuerung eines Querführungssystems, verwendet. Es sei an dieser Stelle darauf hingewiesen, dass anders als bei den Längsrückfallebenen und dem oben beschriebenen hybriden Bremsen im Falle der Ansteuerung einer Quer-Rückfallebene die Querregelgrößen des Fahrerassistenzsystems selbst aus Sicherheitsgründen ignoriert werden, so dass kein hybrides Lenken realisiert ist, da ja gerade eine Lenkfehlfunktion oder dergleichen des Fahrerassistenzsystems zur Aktivierung dieser Rückfallebene geführt haben kann.

Mit besonderem Vorteil kann bei der Querregelung zudem vorgesehen sein, dass diese grundsätzlich solange durchgeführt wird, bis der Stillstand bzw. der sichere Zustand des Kraftfahrzeugs erreicht ist, mithin vom Eintritt der Übernahmebedingung an.

Es sei an dieser Stelle noch angemerkt, dass allgemein bei Längsführungseingriffen, insbesondere Bremseingriffen, die verwendete Bremsverzögerung nicht konstant sein muss. Insbesondere kann der zeitliche Verlauf der Bremsverzögerung eines Bremseingriffs auch genutzt werden, um beispielsweise den Fahrer auf die aktuelle Situation hinzuweisen. Dafür kann beispielsweise eine kurzzeitige starke Bremsverzögerung, ein sogenannter Bremsruck, oder dergleichen vorgesehen werden.

Neben dem erfindungsgemäßen Verfahren betrifft die Erfindung auch ein Kraftfahrzeug, umfassend ein vollautomatisches, zur unabhängigen Fahrzeugführung ausgebildetes Fahrerassistenzsystem mit einem zu dessen Betrieb ausgebildeten Steuergerät, ausgebildet zur Durchführung des erfindungsgemäßen Verfahrens. Im Steuergerät werden also ständig die Systemgrenzen überwacht. Wird festgestellt, dass eine Systemgrenze erreicht ist, also eine Übernahmebedingung erfüllt ist, wird, insbesondere unter Beachtung weiterer Daten und Informationen, ein passender Aktionsplan ausgewählt, der auch Fahreingriffe umfasst. Es ist demnach möglich, das Kraftfahrzeug selbst dann, wenn der Fahrer selber nicht mehr als Rückfallebene vorhanden ist, in einen sicheren Zustand überzuführen. Damit wird die Sicherheit erhöht und dem Fahrer die Möglichkeit gegeben, sich von der Fahraufgabe abzuwenden und beispielsweise Nebentätigkeiten nachzugehen. Sämtliche Ausführungen bezüglich des erfindungsgemäßen Verfahrens lassen sich analog auf das erfindungsgemäße Kraftfahrzeug übertragen. Weitere Vorteile und Einzelheiten der vorliegenden Erfindung ergeben sich aus den im Folgenden dargestellten Ausführungsbeispielen sowie anhand der Zeichnung. Dabei zeigen:

Fig. 1    ein erfindungsgemäßes Kraftfahrzeug,

Fig. 2    einen Organisationsplan zur Realisierung des erfindungsgemäßen Verfahrens,

Fig. 3    einen Komfortbremsplan als Aktionsplan,

Fig. 4    einen Notbremsplan als Aktionsplan,

Fig. 5    einen Zielbremsplan einer ersten angepassten Variante,

Fig. 6    einen Zielbremsplan einer zweiten angepassten Variante,

Fig. 7    einen Zielbremsplan einer dritten angepassten Variante, und

Fig. 8    eine Figur zur Bestimmung eines Lenkwinkels für die Querregelung.

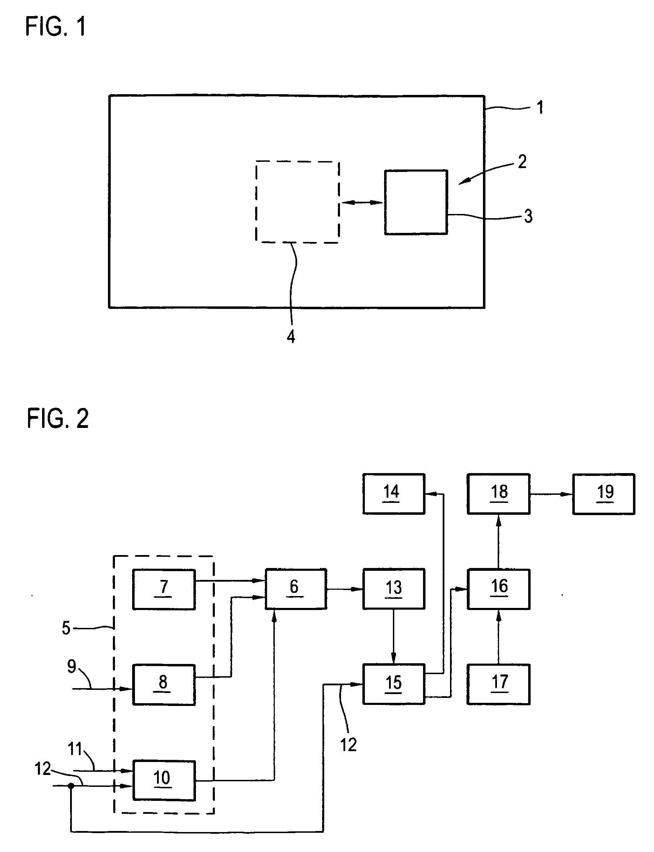

Fig. 1 zeigt die Prinzipskizze eines erfindungsgemäßen Kraftfahrzeugs 1. Es umfasst ein vollautomatisches Fahrerassistenzsystem 2 mit einem Steuergerät 3, das zu dessen Betrieb und auch zur Durchführung des erfindungsgemäßen Verfahrens ausgebildet ist. Das Steuergerät 3 ist zusätzlich dazu ausgebildet, mit weiteren Fahrzeugsystemen, angedeutet bei 4, zu kommunizieren. So umfasst das Kraftfahrzeug verschiedene Sensoren zur Messung der Fahrdynamik und des Umfelds, verschiedene weitere Fahrzeugsysteme, unter anderem ein Lenksystem und ein Bremssystem, und auch weitere Fahrerassistenzsysteme, beispielsweise ein Navigationssystem. Auf diese Daten kann das Steuergerät 3 beispielsweise über ein Bus-System, insbesondere einen CAN-Bus, ebenso zugreifen, um das erfindungsgemäße Verfahren ausführen zu können.

Fig. 2 zeigt in Form eines Blockdiagramms die Wechselwirkung verschiedener Komponenten im Rahmen des erfindungsgemäßen Verfahrens, die beispielsweise als Software-Module, aber teilweise auch als Hardware-Module vorgesehen sein können.

Über eine Modulgruppe 5 erfolgt die Überwachung der Systemgrenzen des Fahrerassistenzsystems 2. Dabei wird überprüft, ob gewisse Übernahmebedingungen erfüllt sind, wobei die Erfüllung einer Übernahmebedingung anzeigende Daten an ein globales Überwachungsmodul 6 weitergegeben werden.

Im vorliegenden Beispiel soll als Fahrerassistenzsystem 2 ein Stauassistenzsystem betrachtet werden. Hierzu seien beispielhaft drei Überwachungsmodule der Modulgruppe 5 näher dargestellt. Ein Modul 7 für lokales Monitoring überwacht die Schnittstellen zwischen Hardware-Komponenten, beispielsweise Sensoren, und algorithmischen Modulen des Fahrerassistenzsystems 2 sowie zwischen algorithmischen Modulen untereinander auf Funktionsfähigkeit sowohl der Module wie auch der Schnittstellen und die Datenfrequenz. Es kann auch vorgesehen sein, dass für jede Recheneinheit ein entsprechendes lokales Monitoring-Modul 7 vorgesehen ist. Systemgrenzen hier können beispielsweise durch einen ausgefallenen Sensor oder ein ausgefallenes Steuergerät erreicht werden.

Das Modul 8 ist ein Modul für externes Monitoring. Es überprüft externe Einflüsse, beispielsweise werden unerlaubte Fahreraktionen, wie beispielsweise das Öffnen der Tür, überwacht, zudem fahrerassistenzsystem-unabhängige Fahrzeugkomponenten, beispielsweise die Ölpumpe, und auch nicht tolerierbare Umwelteinflüsse, beispielsweise der Fahrbahnzustand im Hinblick auf Glätte. Dafür werden Daten der weiteren Fahrzeugsysteme 4 empfangen, beispielsweise über den CAN-Bus, Pfeil 9.

Als letztes Beispiel wird noch ein Modul 10 zur Überwachung von Funktionsgrenzen dargestellt. Die Funktionsgrenzen des Fahrerassistenzsystems 2 werden direkt aus der Funktionsspezifikation abgeleitet und betreffen die Umstände, unter denen das Fahrerassistenzsystem 2 betrieben werden darf. Im hier dargestellten Fall des Stauassistenzsystems muss beispielsweise überwacht werden, ob sich das Kraftfahrzeug 1 im Stau und auf einer Autobahn befindet. Solche Module können auch als Funktionsgrenzen-Monitoring-Module bezeichnet werden. Das Modul 10 verarbeitet dabei prädiktive Streckendaten gemäß dem Pfeil 11 sowie die aktuelle Situation des Kraftfahrzeugs beschreibende Daten, also beispielsweise Umfelddaten von Umfeldsensoren, aber auch Daten über die Fahrdynamik des Kraftfahrzeugs, beispielsweise von entsprechenden Fahrdynamik-Sensoren. Dies wird durch den Pfeil 12 symbolisiert.

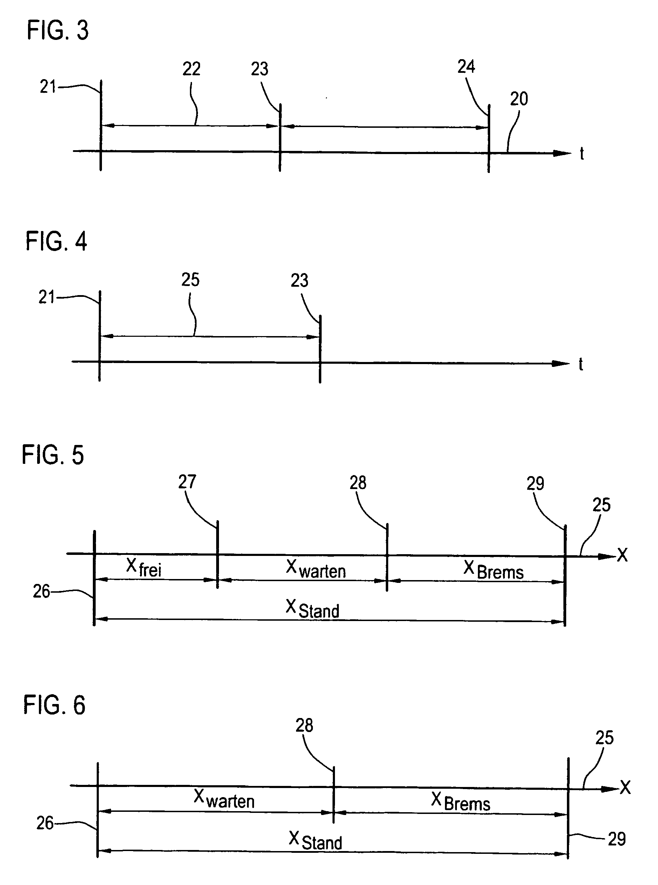

Wie beschrieben, geben die genannten Module 7, 8 und 10 im Falle der Überschreitung einer Systemgrenze, also bei Erfüllung einer Übernahmebedingung, eine Meldung an das nachfolgende globale Überwachungsmodul 6. Dieses speichert den aktuellen globalen Systemzustand und leitet diese Daten nun an ein Modul 13 zur Aktionsplanauswahl weiter. Im Gegensatz zu bekannten Fahrerassistenzsystemen 2 steht hier nicht lediglich eine Fahrerübernahmeaufforderung über ein Mensch-Maschine-Interface 14 zur Verfügung, sondern der Aktionsplan enthält weitere Steuerungsbefehle und deren zeitliche Abfolge, insbesondere jedoch Fahreingriffe, um das Kraftfahrzeug 1 in einen sicheren Zustand zu überführen. Beispiele für Aktionspläne werden im Folgenden, insbesondere bezüglich der Fig. 3 - 8, noch näher diskutiert.

Die Auswahl eines Aktionsplans erfolgt im vorliegenden Falle in Abhängigkeit von der wenigstens einen erfüllten Übernahmebedingung, wobei es grundsätzlich auch denkbar ist, dass er bereits in diesem Moment anhand von die aktuelle Situation beschreibenden Daten angepasst wird. Es werden im vorliegenden Ausführungsbeispiel verschiedene, in Abhängigkeit von die aktuelle Situation beschreibenden Daten parametrierbare Steuerungsbefehle umfassende Aktionspläne verwendet. Auch hierauf wird im Folgenden noch genauer eingegangen werden.

Zur Ausführung des ausgewählten Aktionsplans und zur Anpassung desselben ist nun ein weiteres Modul 15 vorgesehen. Auch das Modul 15 hat Zugriff auf die Umfeld- und Egodaten anhand des Pfeils 12, um insbesondere eine konkrete Rückfalltrajektorie zu ermitteln, aus welcher dann die konkreten Fahreingriffe folgen.

Das Modul 15 kann nun sowohl das Mensch-Maschine-Interface 14 ansteuern, insbesondere zur Ausgabe einer Fahrerübernahmeaufforderung, gleichzeitig liefert es jedoch Sollgrößen für andere Fahrzeugsysteme an ein Modul 16 zur Sollgrößenverwaltung (Arbiter). Weiterhin empfängt das Modul 16 auch die aktuellen Stellgrößen der eigentlichen Funktion des Fahrerassistenzsystems 2, hier folglich des Staupilots, wie durch den Block 17 angedeutet wird.

Im Modul 16 wird bei Bremseingriffen die Sollbremsverzögerung gemäß dem Aktionsplan mit der Sollbremsverzögerung gemäß der eigentlichen Funktion des Fahrerassistenzsystems verglichen. Dabei wird grundsätzlich die größere Sollbremsverzögerung gewählt, um die Sicherheit weiter zu erhöhen. Für Querregelungsgrößen wird ein solcher Vergleich jedoch nicht vorgenommen.

Mit den resultierenden konkreten Ansteuerungsgrößen wird dann ein Quer/Längs-Regelungsmodul 18 versorgt, welches dann entsprechend das Bremssystem und das Lenksystem, symbolisiert durch den Block 19, ansteuert.

Doch auch weitere Fahrzeugsysteme können durch das Modul 15 zur Durchführung des Aktionsplans entsprechend Steuerungsbefehlen angesteuert werden, insbesondere im Hinblick auf den Hinweis an andere Fahrzeuge, dass das Kraftfahrzeug 1 in den sicheren Zustand übergeführt wird. Daher sind in diesem Ausführungsbeispiel insbesondere eine Ansteuerung der Warnblinkanlage des Kraftfahrzeugs 1 und des Signalhorns des Kraftfahrzeugs 1 vorgesehen. Denkbar ist es auch, eine Fahrzeug-zu-Fahrzeug-Kommunikation zu nutzen, um Informationen und Warnhinweise an andere Verkehrsteilnehmer zu senden.

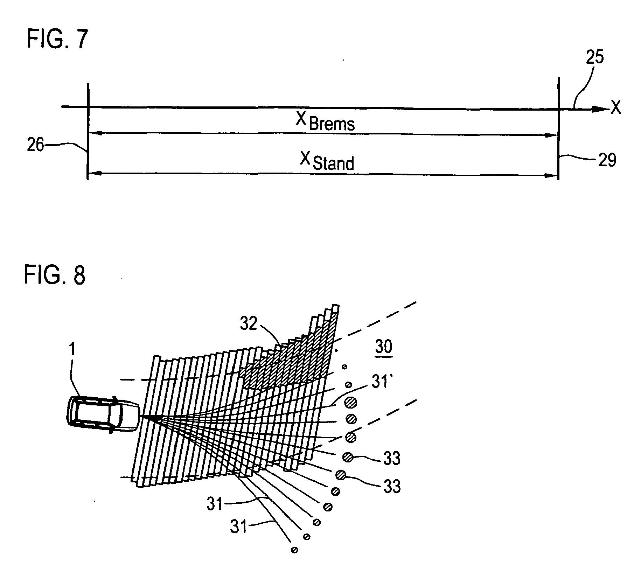

Die durch die Rückfalltrajektorie bestimmten Fahreingriffe des Aktionsplans stellen also letztlich eine weitere Rückfallebene dar, wenn der Fahrer als Rückfallebene nicht länger zur Verfügung steht. Die Rückfalltrajektorien lassen sich dabei im hier beschriebenen Ausführungsbeispiel letztlich in eine Längs-Rückfalltrajektorie und eine Quer-Rückfalltrajektorie aufteilen, wobei vorgesehen ist, dass die Querregelung, welche später mit Hilfe der Fig. 8 näher erläutert wird, während der gesamten Ausführung des Aktionsplans durchgeführt wird. Zunächst soll jedoch auf die Längs-Rückfallebenen näher eingegangen werden.

Das Modul 13 zur Aktionsplanauswahl kann im vorliegenden Fall bezüglich der Längsführung drei verschiedene Aktionspläne auswählen: einen Komfortbremsplan (Fig. 3), einen Notbremsplan (Fig. 4) und einen Zielbremsplan (Fig. 5 - 7). In diesem Ausführungsbeispiel definiert jeder dieser Aktionspläne eine zeitliche Abfolge von vier (parametrierbaren) Grundfunktionalitäten, nämlich "Ausgabe einer Fahrerübernahmeaufforderung", "Aktivieren der Warnblinkanlage", "Aktivieren des Signalhorns" und "Verzögerung mit x m/s$^2$". Daneben erfolgt die später beschriebene Querregelung.

Fig. 3 zeigt ein Beispiel für den Komfortbremsplan. Eine Achse 20 deutet den Zeitverlauf an. Zu einem Zeitpunkt 21 wurde eine Übernahmebedingung erfüllt, das bedeutet, eine Systemgrenze überschritten. Das bedeutet, der Aktionsplan beginnt. Im vorliegenden Fall der Fig. 3 wird dann unmittelbar eine Fahrerübernahmeaufforderung ausgegeben. Daraufhin wird für eine vorgegebene Zeitspanne 22 gewartet. Ist diese abgelaufen, ohne dass der Fahrer die Kontrolle über das Kraftfahrzeug übernommen hat, werden zu einem Zeitpunkt 23 mehrere Steuerungsbefehle ausgeführt. Zum einen wird die Warnblinkanlage des Kraftfahrzeugs 1 aktiviert, um andere Verkehrsteilnehmer zu warnen. Zum anderen setzt eine Bremsung mit einer vorbestimmten Bremsverzögerung ein, das bedeutet, es wird ein Längsführungseingriff, hier ein Bremseingriff mit einer bestimmten Bremsverzögerung, vorgenommen. Dieser hält an, bis zu einem Zeitpunkt 24 das Kraftfahrzeug still steht, mithin der sichere Zustand erreicht ist. Dabei kann hier eine moderate Bremsverzögerung gewählt werden, die das Kraftfahrzeug 1 komfortabel in den Stillstand bewegt.

Es sei bereits an dieser Stelle darauf hingewiesen, dass keine konstante Bremsverzögerung vorgesehen sein muss, sondern sich diese auch über die Zeit verändern kann. Insbesondere kann es vorteilhaft sein, eine kurze Zeit eine hohe Bremsverzögerung anzusetzen (Bremsruck), um den Fahrer verstärkt auf die geänderte Situation und die Deaktivierung des Fahrerassistenzsystems 2 hinzuweisen, denn auch nach dem Zeitpunkt 23 besteht für den Fahrer noch die Möglichkeit, die Kontrolle über das Kraftfahrzeug durch Fahrübernahme zu übernehmen.

Im Beispiel des Stauassistenzsystems kann der Komfortbremsplan beispielsweise genutzt werden, wenn ein sich auflösender Stau oder dergleichen detektiert wurde und so der Bereich verlassen wird, in dem das Fahrerassistenzsystem 2 genutzt werden darf. Der Komfortbremsplan ist also letztlich für weniger kritische Situationen vorteilhaft einsetzbar.

Fig. 4 zeigt nun ein Beispiel für einen Notbremsplan. Dieser wird beispielsweise ausgeführt, wenn eine hochgradig kritische Situation gegeben ist, beispielsweise essentielle Fahrzeugsysteme ausgefallen sind oder dergleichen. Sofort zum Zeitpunkt 21, in dem die Überschreitung der Systemgrenze festgestellt wurde, werden hier mehrere Steuerungsbefehle gleichzeitig im Aktionsplan ausgelöst. Neben der Fahrerübernahmeaufforderung werden die Warnblinkanlagen und das Signalhorn des Kraftfahrzeugs aktiviert. Zudem beginnt ein Bremsvorgang 25 mit der maximal möglichen Bremsverzögerung des Kraftfahrzeugs 1, der anhält, bis das Kraftfahrzeug 1 zum Zeitpunkt 24 zum Stillstand gekommen ist.

Eine Variante des Notbremsplans sieht im Übrigen vor, dass abhängig von der Kritikalität auch mit langsameren Bremsverzögerungen abgebremst werden kann.

Schließlich sei im Hinblick auf die Fig. 5 - 7 noch eine besonders gut anpassbare Variante eines Aktionsplans diskutiert, nämlich der Zielbremsplan. Die Grundidee des Zielbremsplans beruht darauf, dass in vielen Situationen frühzeitig festgestellt werden kann, in welchem Abstand zum aktuellen Ort des Kraftfahrzeugs 1 das Kraftfahrzeug 1 spätestens zum Stillstand gekommen sein sollte, die sogenannte Stillstandsentfernung $x_{Stand}$. Fällt beispielsweise eine Kamera aus, so kann deren letzte Vorausschaureichweite als Stillstandsentfernung hergenommen werden, liegt ein Autobahnende voraus, so kann die Entfernung bis zum Ende der Autobahn als Stillstandsentfernung benutzt werden.

Von dieser Stillstandsentfernung $x_{Stand}$ ist nun hauptsächlich abhängig, wie der Aktionsplan konkret aussieht.

Fig. 5 zeigt eine erste Variante des Zielbremsplans für eine sehr große Stillstandsentfernung $x_{Stand}$. Diesmal ist als Achse hier die Ortsachse 25 verwendet worden. Am Ort 26 wird die Überschreitung der Systemgrenze festgestellt und es wird die Stillstandsentfernung $x_{Stand}$ ermittelt und entsprechend dem Modul 15 übergeben, welches hieraus, aus der aktuellen Geschwindigkeit $v_{ego}$ des Kraftfahrzeugs und einer gegebenenfalls auch von die aktuelle Situation des Kraftfahrzeugs 1 beschreibenden Daten abhängigen Sollbremsverzögerung a drei weitere Wegstrecken berechnet.

Der Bremsweg $x_{brems}$ ist der Weg, den das Kraftfahrzeug braucht, um bei Anwendung der Sollbremsverzögerung a zum Stillstand zu kommen, also

$$x_{brems} = \frac{1}{2} \cdot v_{ego}^2 / a .$$

Weiterhin ist noch eine Zeit t bekannt, die nach einer Fahrerübernahmeaufforderung gewartet werden soll. Hieraus ergibt sich als weitere Größe der Warteweg $x_{warten}$ als:

$$x_{warten} = v_{ego} \cdot t \, .$$

Der Freiweg $x_{frei}$ ergibt sich schließlich durch Subtraktion des Wartewegs $x_{warten}$ und des Bremswegs $x_{brems}$ von der Stillstandsentfernung $x_{Stand}$,

$$x_{frei} = x_{Stand} - x_{warten} - x_{brems} \, .$$

Ist nun der Freiweg $x_{frei}$ größer oder gleich 0, so ergibt sich das in Fig. 5 gezeigte Bild, wenn die Wegstrecken entsprechend in Zeitpunkte umgerechnet werden und der Aktionsplan durchgeführt wird.

Wie bereits erwähnt, wird die Systemgrenze am Ort 26 erkannt. Bis das Fahrzeug den Freiweg $x_{frei}$ zurückgelegt hat, geschieht nichts. Nach dem Zurücklegen des Freiwegs $x_{frei}$, Ort 27, wird eine Fahrerübernahmeaufforderung ausgegeben. Für die Wartezeit t wird nun gewartet, ob der Fahrer die Kontrolle über das Kraftfahrzeug 1 übernimmt. Ist dies nicht der Fall, hat das Kraftfahrzeug 1 dann den Ort 28 erreicht und es wird ein Bremseingriff mit der Bremsverzögerung a vorgenommen, bis das Kraftfahrzeug 1 wie geplant am Ort 29 zum Stillstand kommt. Dabei wurde exakt die Stillstandsentfernung zurückgelegt. Im aktuellen Ausführungsbeispiel ist zudem noch vorgesehen, dass ab dem Ort 28 wiederum die Warnblinkanlage des Kraftfahrzeugs 1 aktiviert wird.

Auch hier sind im Übrigen andere, nicht konstante Verläufe der Sollbremsverzögerung a denkbar.

Abhängig von der Größe der Stillstandsentfernung $x_{Stand}$ können jedoch auch andere Fälle auftreten, insbesondere solche, in denen $x_{frei}$ negativ wird oder gar $x_{brems}$ größer also $x_{Stand}$ wird. Diese Fälle sind nun in Fig. 6 näher dargestellt. Ist $x_{frei}$ kleiner als 0, wird im vorliegenden Ausführungsbeispiel der Warteweg $x_{warten}$ und somit auch die Wartezeit t einfach verkürzt, wie aus Fig. 6 ersichtlich ist. Unmittelbar am Ort der Überschreitung der Systemgrenze wird die Fahrerübernahmeaufforderung ausgegeben, nach Verstreichen der modifizierten Wartezeit t bzw. Abfahren des Wartewegs $x_{warten}$ (welcher sich hier als $x_{stand}$ - $x_{brems}$ ergibt) wird zum Zeitpunkt 28 mit dem Bremsen begonnen und die Warnblinkanlage aktiviert.

Es kann sogar vorkommen, dass der mit der Sollbremsverzögerung a errechnete Bremsweg $x_{brems}$ größer als die Stillstandsentfernung $x_{Stand}$ ist, so dass, um überhaupt noch auf den Stillstandsort 29 hin bremsen zu können, unmittelbar mit dem Bremsen begonnen werden muss, wobei die Sollbremsverzögerung so angepasst werden muss, dass der Bremsweg $x_{brems}$ wieder der Stillstandsentfernung $x_{Stand}$ entspricht. Bei der Variante nach Fig. 7 wird also sofort zu bremsen begonnen, es wird sofort die Warnblinkanlage aktiviert und sofort die Fahrerübernahmeaufforderung ausgegeben.

Es sei noch darauf hingewiesen, dass, falls eine Bremsverzögerung, mit der noch innerhalb der Stillstandsentfernung gebremst werden könnte, nicht realisierbar ist, die maximale Bremsverzögerung hergenommen wird; der Zielbremsplan geht dann über in den Notbremsplan (Fig. 4).

Bei allen dargestellten Aktionsplänen kann im Übrigen auch vorgesehen sein, dass mit Erreichen des Stillstands eine Parkbremse des Kraftfahrzeugs 1 aktiviert wird.

Schließlich soll noch mit Hinblick auf Fig. 8 erläutert werden, wie mit Hilfe des erfindungsgemäßen Verfahrens auch eine Quer-Rückfallebene realisiert werden kann.

Hierzu wird der sogenannte DAMN-Ansatz verwendet, da damit als rein reaktives, leicht erweiterbares Verfahren auf einem sehr einfachen und daher fehlerunanfälligen Weg eine Querführung realisiert werden kann.

Dabei wird davon ausgegangen, dass in einer bestimmten Frequenz sensorisch ermittelte Umfelddaten geliefert werden, die dann ausgewertet werden können. In jedem Zeitschritt, in dem dann neue Umfelddaten zur Verfügung stehen, werden zunächst alle fahrphysikalisch theoretisch möglichen Klothoiden als mögliche Trajektorien bestimmt. Fig. 8 zeigt das Kraftfahrzeug 1 auf einer Fahrspur 30. Beispielhaft sind zudem einige mögliche Klothoiden 31, die über ihre Krümmung und Krümmungsänderung parametriert sind, dargestellt. Diese werden nun anhand zweier, auf Sicherheitsaspekte bezogener Kriterien bewertet, nämlich zum einen sollen Hindernisse vermieden werden, zum anderen soll idealerweise die eigene Spur gehalten werden. Im Bereich 32 in Fig. 8 soll nun ein solches Hindernis vorgesehen sein. Wenn anhand dieser Kriterien die Klothoiden 31 bewertet werden, ergibt sich beispielsweise für jede Klothoide 31 eine Punktzahl, die hier über die Größe der Punkte 33 abgebildet ist. Ersichtlich wird die Klothoide 31' am besten bewertet.

Aus der Krümmung und Krümmungsänderung der am besten bewerteten Klothoide 31' wird nun über die Ackermann-Gleichung der ihr zugehörige Lenkwinkel berechnet. Der Querwinkel wird folglich in jedem Zeitschritt neu berechnet und entsprechend an das Modul 18 gegeben.

Diese Querregelung mittels des DAMN-Ansatzes wird solange aufrechterhalten, bis der Stillstand des Kraftfahrzeugs 1 erreicht ist.

So ist es mittels des erfindungsgemäßen Verfahrens und des erfindungsgemäßen Kraftfahrzeugs möglich, auch bei Wegfall des Fahrers als Rückfallebene das Kraftfahrzeug 1 in einen sicheren Zustand überzuführen.

**Patentansprüche**

**1.** Verfahren zur Steuerung des Betriebs eines vollautomatischen, zur unabhängigen Fahrzeugführung ausgebildeten Fahrerassistenzsystems (2) eines Kraftfahrzeugs (1), bei welchem bei Eintritt wenigstens einer Übernahmebedingung eine Fahrerübernahmeaufforderung ausgegeben wird, welche bei Fahrübernahme durch den Fahrer, insbesondere durch Betätigung des Lenkrads und/oder der Pedalerie und/oder eines Schalters, zum Deaktivieren des Fahrerassistenzsystems (2) führt, **dadurch gekennzeichnet,** **dass** bei Eintritt einer Übernahmebedingung ein wenigstens einen zur Überführung des Kraftfahrzeugs (1) in einen sicheren Zustand, insbesondere den Stillstand, dienenden Fahreingriff und insbesondere auch eine Fahrerübernahmeaufforderung umfassender Aktionsplan, der einen zeitlichen Ablauf von Steuerungsbefehlen für Fahrzeugsysteme (4) enthält, ausgeführt wird, wobei ein einen Längsführungseingriff, insbesondere einen Bremseingriff, umfassender Aktionsplan verwendet wird, wobei bei Ausführung des Bremseingriffs die diesem zugrunde liegende Bremsverzögerung mit einer aktuell ermittelten Bremsverzögerung der normalen Funktion des Fahrerassistenzsystems verglichen wird und die höhere Bremsverzögerung genutzt wird.

2. Verfahren nach Anspruch 1,
**dadurch gekennzeichnet,**
**dass** der Aktionsplan aus einer Anzahl fest vorgegebener Aktionspläne ausgewählt und/oder unter Berücksichtigung von die aktuelle Situation beschreibenden Daten, insbesondere der Übernahmebedingung, angepasst wird.

3. Verfahren nach Anspruch 1 oder 2,
**dadurch gekennzeichnet,**
**dass** eine in den sicheren Zustand führende Rückfalltrajektorie ermittelt wird, aus welcher die Fahreingriffe ermittelt werden.

4. Verfahren nach einem der vorangehenden Ansprüche,
**dadurch gekennzeichnet,**
**dass** ein verschiedene, insbesondere in Abhängigkeit von die aktuelle Situation beschreibenden Daten parametrierbare Steuerungsbefehle umfassender Aktionsplan verwendet wird, wobei die Steuerungsbefehle neben einer Fahrerübernahmeaufforderung insbesondere einen Längsführungseingriff und/oder einen Querführungseingriff als Fahreingriff und/oder das Aktivieren der Warnblinkanlage und/oder das Nutzen einer Fahrzeug-zu-Fahrzeug-Kommunikation zur Übertragung einer Warnung und/oder das Aktivieren eines Signalhorns umfassen.

5. Verfahren nach einem der vorangehenden Ansprüche,
**dadurch gekennzeichnet,**
**dass** als Aktionsplan ein Komfortbremsplan verwendet wird, bei dem zunächst eine Fahrerübernahmeaufforderung ausgegeben wird, wobei, wenn nach einer vorbestimmten Zeitspanne (22) keine Fahrübernahme durch den Fahrer erfolgt, mit einer vorbestimmten Komfortbremsverzögerung in den Stillstand gebremst wird und insbesondere die Warnblinkanlage aktiviert wird.

6. Verfahren nach einem der vorangehenden Ansprüche,
**dadurch gekennzeichnet,**
**dass** als Aktionsplan ein Notbremsplan verwendet wird, bei dem ein sofortiger Bremseingriff mit einer maximalen Bremsverzögerung erfolgt, wobei insbesondere gleichzeitig eine Fahrerübernahmeaufforderung und/oder ein Aktivieren der Warnblinkanlage und/oder ein Aktivieren des Signalhorns und/oder ein Senden einer Warnnachricht an wenigstens ein benachbartes Kraftfahrzeug erfolgt.

7. Verfahren nach einem der vorangehenden Ansprüche,
**dadurch gekennzeichnet,**
**dass** als Aktionsplan ein anpassbarer, auf eine bestimmte Stillstandsentfernung ausgelegter Zielbremsplan verwendet wird, dem als Parameter die Stillstandsentfernung übergeben wird.

8. Verfahren nach Anspruch 7
**dadurch gekennzeichnet,**
**dass** aus der Stillstandsentfernung und der ebenso übergebenen aktuellen Geschwindigkeit des Kraftfahrzeugs (1) unter Annahme einer gegebenenfalls von die aktuelle Situation beschreibenden Daten, insbesondere der Übernahmebedingung, abhängigen Sollbremsverzögerung ein Bremsweg, unter Vorgabe einer Wartezeit ein Warteweg und ein aktionsfreier Freiweg durch Subtraktion des Bremswegs und des Wartewegs von der Stillstandsentfernung ermittelt werden, wobei

- falls der Freiweg größer oder gleich Null ist, zunächst für eine dem Freiweg entsprechende Fahrtzeit keine Aktion erfolgt, wonach eine Fahrerübernahmeaufforderung ausgegeben wird und, falls innerhalb der Wartezeit keine Fahrübernahme durch den Fahrer erfolgt, nach der Wartezeit ein Bremseingriff mit der Sollbremsverzögerung erfolgt,
- falls der Freiweg kleiner als Null, aber der Bremsweg kleiner als oder gleich der Stillstandsentfernung ist, unmittelbar eine Fahrerübernahmeaufforderung ausgegeben wird und, falls innerhalb einer dem Warteweg entsprechenden, modifizierten Wartezeit keine Fahrübernahme durch den Fahrer erfolgt, nach der modifizierten Wartezeit ein Bremseingriff mit der Sollbremsverzögerung erfolgt, und
- falls der Freiweg kleiner als Null ist und der Bremsweg größer als die Stillstandsentfernung ist, unmittelbar eine Fahrerübernahmeaufforderung und ein Bremseingriff mit einer eine Bremsung innerhalb der Stillstandsentfernung erlaubenden oder maximalen Bremsverzögerung erfolgen.

**9.** Verfahren nach Anspruch 7 oder 8,
**dadurch gekennzeichnet,**
**dass** mit Durchführen eines Bremseingriffs auch ein Aktivieren der Warnblinkanlage und/oder ein Aktivieren des Signalhorns und/oder ein Senden einer Warnnachricht an wenigstens ein benachbartes Kraftfahrzeug erfolgt.

**10.** Verfahren nach einem der Ansprüche 7 bis 9,
**dadurch gekennzeichnet,**
**dass** die Stillstandsentfernung unter Berücksichtigung der Übernahmebedingung und/oder von zu der Übernahmebedingung führenden Daten und/oder aus anderen, die aktuelle Situation beschreibenden Daten ermittelt wird.

**11.** Verfahren nach einem der vorangehenden Ansprüche,
**dadurch gekennzeichnet,**
**dass** ein Kraftfahrzeug (1) mit einem wenigstens teilweise redundant ausgeführten Bremssystem verwendet wird.

**12.** Verfahren nach einem der vorangehenden Ansprüche,
**dadurch gekennzeichnet,**
**dass** ein einen Querführungseingriff umfassender Aktionsplan verwendet wird.

**13.** Verfahren nach Anspruch 12,
**dadurch gekennzeichnet,**
**dass** ein den Querführungseingriff beschreibender Lenkwinkel unter Berücksichtigung von das Umfeld des Kraftfahrzeugs (1) beschreibenden Umfelddaten, insbesondere Sensordaten und/oder Daten eines Navigationssystems, ermittelt wird.

**14.** Verfahren nach Anspruch 13,
**dadurch gekennzeichnet,**
**dass** in jedem Zeitschritt des Aktionsplans mit Querführungseingriff alle fahrphysikalisch möglichen Klothoiden (31) ermittelt und durch Bewertungskriterium, insbesondere Hindernisfreiheit der Klothoide (31) und/oder Halten der aktuellen Spur (30), bewertet werden, wobei die am besten bewertete Klothoide (31') zur Bestimmung des Lenkwinkels ausgewählt wird.

**15.** Kraftfahrzeug (1), umfassend ein vollautomatisches, zur unabhängigen Fahrzeugführung ausgebildetes Fahrerassistenzsystem (2) mit einem zu dessen Betrieb ausgebildeten Steuergerät (3), ausgebildet zur Durchführung des Verfahrens nach einem der Ansprüche 1 bis 14.

**Claims**

**1.** Method for controlling the operation of a fully automatic driver assistance system (2) of a motor vehicle (1) which is configured for independent vehicle guidance and in which, when at least one takeover condition occurs, a driver takeover request is emitted which, when the driver takes over the driving, in particular by actuating the steering wheel and/or the pedals and/or a switch, leads to the driver assistance system (2) being deactivated,
**characterised in that**,
when a takeover condition occurs, an action plan is carried out which comprises at least one driving intervention serving to bring the motor vehicle (1) into a safe condition, in particular to a standstill, and in particular also comprises a driver takeover request and contains a temporal sequence of control commands for vehicle systems (4), an action plan being used which comprises a longitudinal guidance intervention, in particular a braking intervention, and, when a braking intervention is carried out, the braking deceleration on which said intervention is based is compared with a currently determined braking deceleration of the normal operation of the driver assistance system and the higher braking deceleration is used.

**2.** Method according to claim 1, **characterised in that** the action plan is selected from a number of rigidly predetermined action plans and/or is adapted while taking into consideration data describing the current situation, in particular the takeover condition.

**3.** Method according to either claim 1 or claim 2, **characterised in that** a return trajectory resulting in the safe condition is determined and used to determine the driving interventions.

**4.** Method according to any of the preceding claims, **characterised in that** a different action plan is used comprising control commands which can be parameterised in particular as a function of data defining the current situation, the control commands in particular comprising, in addition to a driver takeover request, a longitudinal guidance intervention and/or a transverse guidance intervention as a driving intervention and/or the activation of the hazard light system and/or the use of vehicle-to-vehicle communication for transmitting a warning and/or the activation of a horn.

**5.** Method according to any of the preceding claims, **characterised in that** a comfort braking plan is used as the action plan, in which a driver takeover request is initially emitted and if, after a predetermined time interval (22), the driver has not taken over the driving, the vehicle is braked to a standstill at a predetermined comfort braking deceleration and the hazard light system in particular is activated.

**6.** Method according to any of the preceding claims, **characterised in that** an emergency braking plan is used as the action plan, in which an immediate braking intervention having a maximum braking deceleration is carried out, in particular a driver takeover request and/or an activation of the hazard light system and/or an activation of the horn and/or a transmission of a warning message to at least one adjacent motor vehicle taking place simultaneously.

**7.** Method according to any of the preceding claims, **characterised in that** an adaptable target braking plan configured for a given standstill distance is used as the action plan, to which the standstill distance is transferred as a parameter.

**8.** Method according to claim 7, **characterised in that**, from the standstill distance and the likewise transferred current speed of the motor vehicle (1), while assuming a desired braking deceleration, optionally as a function of data defining the current situation, in particular the takeover condition, a braking path, a waiting path - while specifying a waiting time - and, by subtracting the braking path and the waiting path from the standstill distance, an action-free clear path are determined, wherein

- if the clear path is greater than or equal to zero, no action is initially taken for a travel time corresponding to the clear path, whereupon a driver takeover request is emitted and, if the driver does not take over the driving within the waiting time, a braking intervention having the desired braking deceleration is carried out after the waiting time,
- if the clear path is less than zero, but the braking path is less than or equal to the standstill distance, a driver takeover request is directly emitted and, if the driver does not take over the driving within a modified waiting time corresponding to the waiting path, a braking intervention having the desired braking deceleration is carried out after the modified waiting time, and
- if the clear path is less than zero and the braking path is greater than the standstill distance, a driver takeover request and a braking intervention having a maximum braking deceleration or a braking deceleration allowing braking within the standstill distance are directly carried out.

**9.** Method according to either claim 7 or claim 8, **characterised in that**, with the performance of a braking intervention, the hazard light system is activated and/or the horn is activated and/or a warning message is sent to at least one adjacent motor vehicle.

**10.** Method according to any of claims 7 to 9, **characterised in that** the standstill distance is determined while taking into consideration the takeover condition and/or from data resulting in the takeover condition and/or from other data defining the current situation.

**11.** Method according to any of the preceding claims, **characterised in that** a motor vehicle (1) having a braking system which is configured so as to be redundant at least in part is used.

**12.** Method according to any of the preceding claims, **characterised in that** an action plan comprising a transverse guidance intervention is employed.

**13.** Method according to claim 12, **characterised in that** a steering angle describing the transverse guidance intervention is detected while taking into consideration environmental data describing the environment of the motor vehicle (1), in particular sensor data and/or data from a navigation system.

**14.** Method according to claim 13, **characterised in that**, in each time step of the action plan having transverse guidance intervention, all possible physical travel clothoids (31) are determined and are evaluated by an evaluation criterion, such as in particular the clothoid (31) being free from obstacles and/or the current course (30) being held, the best evaluated clothoid (31') being selected for determining the steering angle.

**15.** Motor vehicle (1), comprising a fully automatic driver assistance system (2) which is configured for independent vehicle guidance and has a control device (3) which is configured for the operation of said system, configured for carrying out the method according to any of claims 1 to 14.

**Revendications**

**1.** Procédé de commande du fonctionnement d'un système d'assistance (2) totalement automatique développé pour guider un véhicule de manière indépendante destiné à un véhicule automobile (1), dans lequel, à l'entrée d'au moins une condition de prise en charge, il apparaît une invitation de prise en charge par le conducteur, qui, lors de la prise en charge par le conducteur, en particulier par commande du volant de direction et/ou du pédalier et/ou d'un commutateur, mène à une désactivation du système d'assistance au conducteur (2), **caractérisé en ce que**, à l'entrée d'une condition de prise en charge, il apparaît un plan d'action comprenant au moins une intervention de conduite servant à transférer le véhicule automobile (1) dans un état sûr, en particulier à l'arrêt, et, en particulier, une invitation de prise en charge par le conducteur, lequel plan d'action contient un déroulement dans le temps d'instructions de commande pour des systèmes (4) du véhicule automobile, dans lequel on utilise un plan d'action comprenant une intervention de guidage longitudinal, en particulier une intervention sur le frein, dans lequel, lors de l'exécution de l'intervention sur le frein, le retard de freinage par rapport à celle-ci est comparé à un retard de freinage déterminé courant de la fonction normale du système d'assistant au conducteur et c'est le retard de freinage le plus élevé qui est utilisé.

2. Procédé selon la revendication 1, **caractérisé en ce que** le plan d'action est choisi parmi un certain nombre de plans d'action prédéterminé de manière fixe et/ou est adapté en tenant compte de données décrivant la situation en cours, en particulier la condition de prise en charge.

3. Procédé selon la revendication 1 ou 2, **caractérisé en ce qu'**une trajectoire de recul menant à l'état sûr, à partir de laquelle trajectoire les interventions de conduite sont déterminées.

4. Procédé selon l'une quelconque des revendications précédentes, **caractérisé en ce que** on utilise un plan d'action comprenant diverses instructions de commande paramétrables en particulier en fonction de données décrivant la situation en cours, dans lequel les instructions de commande comprennent, à côté d'une invitation de prise en charge du conducteur, en particulier une intervention de guidage longitudinal et/ou une intervention de guidage transversal comme intervention de conduite et/ou l'activation des feux de détresse et/ou l'utilisation d'une communication de véhicule à véhicule pour transférer un avertissement et/ou l'activation d'un avertisseur sonore.

5. Procédé selon l'une quelconque des revendications précédentes, **caractérisé en ce que** on utilise comme plan d'action un plan de freinage de confort, dans lequel il apparaît tout d'abord une invitation de prise en charge du conducteur, dans lequel, lorsque, au bout d'un intervalle prédéterminé (22), il ne se produit aucune prise en charge par le conducteur, le véhicule est freiné avec un retard de freinage de confort prédéterminé à l'arrêt et, en particulier, les feux de détresse sont activés.

6. Procédé selon l'une quelconque des revendications précédentes, **caractérisé en ce que** on utilise comme plan d'action un plan de freinage d'urgence, dans lequel une intervention de freinage immédiate se fait avec un retard de freinage maximal, dans lequel il se produit en particulier simultanément une invitation de prise en charge du conducteur et/ou une activation des feux de détresse et/ou une activation de l'avertisseur sonore et/ou un envoi d'un message d'avertissement à au moins un véhicule automobile voisin.

7. Procédé selon l'une quelconque des revendications précédentes, **caractérisé en ce que** on utilise comme plan d'action un plan de freinage ciblé adaptable étudié sur une distance d'arrêt déterminée, auquel plan la distance d'arrêt est transférée comme paramètre.

8. Procédé selon la revendication 7 **caractérisé en ce que** à partir de la distance d'arrêt et de la vitesse courante également transférée du véhicule automobile (1) en tenant compte de données décrivant éventuellement la situation en cours, en particulier le retard de freinage théorique dépendant de la condition de prise en charge, on détermine une voie de freinage en tenant compte d'un temps d'attente, une voie d'attente et une voie libre sans action par soustraction de la voie de freinage et de la voie d'attente de la distance d'arrêt, dans lequel :

- si la voie libre est supérieure ou égale à zéro, il ne se produit tout d'abord pas d'action pour un temps de conduite correspondant à la voie libre, après quoi il apparaît une invitation de prise en charge par le conducteur et, au cas où, pendant le temps d'attente, il ne se produit aucune prise en charge par le conducteur, il se produit, après le temps d'attente, une intervention de freinage avec le retard de freinage théorique,
- si la voie libre est inférieure à zéro, mais que la voie de freinage est inférieure ou égale à la distance d'arrêt, il apparaît directement une invitation de prise en charge par le conducteur, au cas où, dans un temps d'attente modifié correspondant à la voie d'attente, il ne se produit aucune prise en charge de conduite par le conducteur, après le temps d'attente modifié, il se produit une intervention de freinage avec le retard de freinage théorique, et
- si la voie libre est inférieure à zéro et que la voie de freinage est supérieure à la distance d'arrêt, il se produit directement une invitation de prise en charge par le conducteur et une intervention de freinage avec un retard de freinage autorisant un freinage dans les limites de la distance d'arrêt ou un retard de freinage maximal.

**9.** Procédé selon la revendication 7 ou 8, **caractérisé en ce que**, en réalisant une intervention de freinage, il se produit également une activation des feux de détresse et/ou une activation de l'avertisseur sonore et/ou un envoi d'un message d'avertissement à au moins un véhicule automobile voisin.

**10.** Procédé selon l'une quelconque des revendications 7 à 9, **caractérisé en ce que** la distance d'arrêt est déterminée en tenant compte de la condition de prise en charge et/ou de données menant à la condition de prise en charge et/ou d'autres données décrivant la situation en cours.

**11.** Procédé selon l'une quelconque des revendications précédentes, **caractérisé en ce que** on utilise un véhicule automobile (1) avec un système de freinage élaboré au moins de manière partiellement redondante.

**12.** Procédé selon l'une quelconque des revendications précédentes, **caractérisé en ce que** on utilise un plan d'action comprenant une intervention de guidage transversal.

**13.** Procédé selon la revendication 12, **caractérisé en ce que** on détermine un angle de direction décrivant l'intervention de guidage transversal en tenant compte de données ambiantes décrivant le champ du véhicule automobile (1), en particulier des données de capteurs et/ou des données d'un système de navigation.

**14.** Procédé selon la revendication 13, **caractérisé en ce que** à chaque étape du plan d'action avec l'intervention de guidage transversal, on détermine toutes les clothoïdes (31) possibles physiquement au plan de la conduite et on évalue, par un critère d'évaluation, en particulier la liberté de franchissement d'obstacles de la clothoïde (31) et/ou le maintien de la voie en cours (30), dans lequel la clothoïde (31') la mieux évaluée est choisie pour déterminer l'angle de direction.

**15.** Véhicule (1) comprenant un système d'assistance au conducteur (2) totalement automatique destiné à un guidage indépendant du conducteur avec un appareil de commande (3) élaboré pour son fonctionnement, aménagé pour réaliser le procédé selon l'une quelconque des revendications 1 à 14.

FIG. 1

FIG. 2

FIG. 3

FIG. 4

FIG. 5

$$X_{frei} \qquad X_{warten} \qquad X_{Brems}$$

$$X_{Stand}$$

FIG. 6

$$X_{warten} \qquad X_{Brems}$$

$$X_{Stand}$$

FIG. 7

FIG. 8

**IN DER BESCHREIBUNG AUFGEFÜHRTE DOKUMENTE**

**In der Beschreibung aufgeführte Patentdokumente**

- DE 10350276 A1
- DE 10220782 A1
- DE 102006039682 A1

**In der Beschreibung aufgeführte Nicht-Patentliteratur**

- **ROSENBLATT, J. K.** DAMN: A Distributed Architecture for Mobile Navigation. *Robotics Institute, Carnegie Mellon University,* 1997